# EUROPÄISCHE PATENTANMELDUNG

(11) **EP 4 098 767 A1**
(43) Veröffentlichungstag der Anmeldung: **07.12.2022**
(21) Anmeldenummer: 21177284.3
(22) Anmeldetag: 02.06.2021
(51) Int. Cl.: C23C 4/12, B33Y 10/00, B33Y 80/00, B22F 10/00, B29C 64/159, B29C 70/28, C23C 4/08, C23C 24/04

(54) **VERSTÄRKEN EINER STRUKTUR DURCH EINE FASERVERSTÄRKTE MATRIX**

(71) Anmelder: Siemens Aktiengesellschaft, 80333 München (DE)
(72) Erfinder: Krüger, Ursus, 14089 Berlin (DE); Rehme, Olaf, 20148 Hamburg (DE)

(57) **Zusammenfassung**

Verfahren zum zumindest abschnittsweisen Verstärken einer Struktur (1) durch eine faserverstärkte Matrix (24). Um die mechanischen und thermischen Eigenschaften von Strukturen lokal zu verbessern, insbesondere die thermo-mechanische Belastbarkeit zu erhöhen, werden die Schritte vorgeschlagen:
- Bereitstellen der Struktur (1) mit einem zu verstärkenden Abschnitt (20),
- Aufbringen von Fasern (22) auf den zu verstärkenden Abschnitt (20) und
- Aufbringen der Matrix (24) mittels Kaltgasspritzen, sodass die Fasern in die Matrix (24) eingebettet werden und die Matrix an die Struktur, insbesondere stoffschlüssig, angebunden wird.

## Beschreibung

Die Erfindung betrifft ein Verfahren zum Verstärken einer Struktur durch eine faserverstärkte Matrix.

Ein derartiges Verfahren kommt beispielsweise als Ergänzung zur additiven Fertigung von hochbelasteten Bauteilen oder im Maschinenbau zum Einsatz.

Der Wunsch nach einer lokalen Optimierung von Werkstoffeigenschaften konnte bislang z. B. durch die Verwendung eines Materialmix erreicht werden, wobei stets das Problem der Verbindung der unterschiedlichen Werkstoffe bestand. Andererseits gelingt mit einem Ansatz für Materialmix kaum eine kleinskalige Auflösung der Eigenschaften, d.h. eine Variation der Eigenschaften im Bereich weniger Millimeter.

Der Erfindung liegt die Aufgabe zugrunde, die mechanischen und thermischen Eigenschaften von Strukturen lokal zu verbessern, insbesondere die thermo-mechanische Belastbarkeit zu erhöhen.

Diese Aufgabe wird durch ein Verfahren mit den im Anspruch 1 angegebenen Merkmalen gelöst.

Zum zumindest abschnittsweisen Verstärken einer Struktur durch eine faserverstärkte Matrix, werden folgende Schritte vorgeschlagen:
- Bereitstellen der Struktur mit einem zu verstärkenden Abschnitt,
- Aufbringen von Fasern auf den zu verstärkenden Abschnitt und
- Aufbringen der Matrix mittels Kaltgasspritzen, sodass die Fasern in die Matrix eingebettet werden und die Matrix an die Struktur angebunden wird.

Durch das Kaltgasspritzen werden die Fasern direkt in die Matrix ein- und an die Struktur angebunden, insbesondere stoffschlüssig. Die grundlegende Struktur kann so durch günstige und gut beherrschbare Verfahren und Prozesse gefertigt werden. An den Stellen, bzw. Abschnitten, an denen hohe Belastungen zu erwarten sind, kann die Struktur dementsprechend verstärkt werden. Insbesondere in Verbindung mit Simulationen der Struktur kann so ein deutlich verbessertes Bauteil hergestellt werden.

Die Fasern bzw. die Faserwerkstoffe können dabei entlang jeder Richtung eines Bauteils verlegt werden. Entweder uniaxial oder in einer Ebene oder entlang dreidimensionaler Konturen. Es hat sich als vorteilhaft herausgestellt, wenn die Fasern in Richtung der größten Belastung angeordnet sind. Dies kann direkt im Verfahren realisiert werden.

Die vorliegende Erfindung erlaubt es, lokal die Eigenschaften im Werkstoffgefüge eines Bauteils angepasst zu variieren.

In einer weiteren Ausführungsform umfasst das Verfahren den Schritt des Aufbringens einer ersten Schicht mittels Kaltgasspritzen auf den zu verstärkenden Abschnitt. Die erste Schicht kann also direkt auf die Struktur aufgebracht werden. Die Fasern werden dann auf die erste Schicht aufgebracht. So kann die Verbindung zwischen der Matrix und der faserverstärkten Matrix weiter verbessert werden. Die erste Schicht kann dabei aus dem Material der Matrix bestehen.

In einer weiteren Ausführungsform bildet die erste Schicht einen Teil der Matrix, womit die Fasern besonders gut in die Matrix eingebunden und an die Struktur angebunden sind.

In einer weiteren Ausführungsform umfasst das Verfahren den Schritt des Aufbringens einer Deckschicht auf die Fasern, wobei die Deckschicht mittels Kaltgasspritzen aufgebracht wird und sodass die Fasern von der Deckschicht abgedeckt sind. Die Fasern können so also vollständig von der vorteilhaften Materialkombination und den damit einhergehenden guten mechanischen Eigenschaften einer Cold-Spray-Schicht umgeben sein. Matrix ist so also besonders robust. Auch die Anbindung an die und der Übergang zur Struktur ist mit einer Deckschicht besonders gut möglich.

In einer weiteren Ausführungsform sind die Fasern SiC-Fasern, Kohlefasern, Glasfasern oder Kombinationen davon.

In einer weiteren Ausführungsform weist die Matrix ein duktiles metallisches Material oder deren Legierungen auf. Die Matrix besteht dabei insbesondere aus dem zum Kaltgasspritzen verwendeten Material (Cold-Spray-Material). Beispielsweise kommen hier Aluminium-, Titan-, Nickelbasis- und KupferLegierungen sowie Stähle zum Einsatz.

In einer weiteren Ausführungsform wird zum Aufbringen der Fasern ein Haftvermittler auf den zu verstärkenden Abschnitt aufgebracht. Die Haftvermittler sind dabei insbesondere aus der Gruppe Zn oder Sn ausgewählt. Der Haftvermittler kann auch mit Kaltgasspritzen aufgebracht werden.

In einer weiteren Ausführungsform werden zum Bereitstellen der Struktur zumindest Teile der Struktur mittels eines generativen Verfahrens erzeugt. Generative Verfahren haben dabei den Vorteil, dass die Struktur und der zu verstärkende Abschnitt einfach an die Geometrie des Abschnitts und der gewünschten Matrix angepasst werden kann. Als generatives Verfahren kann beispielsweise das Auftragschweißen mit dem Kaltgasspritzverfahren verwendet werden. Es ist aber ebenso denkbar, dass mittels Laserstrahl- oder Elektronenstrahlschmelzen gefertigte Strukturen mit dem erfindungsgemäßen Verfahren verstärkt werden.

In einer weiteren Ausführungsform werden wird zum Bereitstellen der Struktur ein Halbzeug der Struktur bereitgestellt. Das Halbzeug weist dabei eine um den Abschnitt verringerte Geometrie auf. Insbesondere in Verbindung mit

In einer weiteren Ausführungsform ist die Struktur eine metallische Struktur.

In einer weiteren Ausführungsform ist die Struktur eine nichtmetallische Struktur und zum Aufbringen der Matrix auf den Abschnitt ist eine Haftvermittlerschicht insbesondere aus der Gruppe Zn oder Sn vorgesehen.

In einer weiteren Ausführungsform wird zum Bereitstellen der Struktur zumindest ein den Abschnitt umfassender Teil der Struktur additiv gefertigt. Dies hat den Vorteil, dass die Struktur bereits so gefertigt werden kann, dass der Abschnitt bereits zum Anbinden der Matrix ausgebildet ist. Weiterhin kann zumindest unter den gegebenen Randbedingungen der vorgesehenen Anwendung der Struktur, eine entsprechende Anpassung der Struktur auf die Matrix im Abschnitt vorgesehen ist. Unabhängig davon, ob die Struktur an die Matrix angepasst wird, ist ein großer Vorteil einer additiven Bereitstellung der Struktur groß, dass komplexe Formen gut realisiert werden können. Als additive Verfahren kommen beispielsweise Auftragschweißen, pulverbettbasierte Laser- und/oder Elektronenstrahlschmelzverfahren und weitere gängige additive Verfahren in Frage.

Allgemein und in anderen Worten ist das erfindungsgemäße Verfahren besonders vorteilhaft, da die Einbettung von Faserwerkstoffen in Material, das durch Kaltgasspritzen geformt wird, eine Kombination der außergewöhnlichen Eigenschaften von Kaltgas-Oberflächen mit der Verstärkung durch die Fasern erst ermöglicht und so z. B. hohe Zugfestigkeiten in Verbindung mit hoher Zähigkeit realisierbar sind. Vorteilhaft ist insbesondere die hohe Flexibilität durch die Kombination einer kompletten 3D-Bearbeitung sowohl im Urformen des metallischen Werkstoffs als auch des Faserverbundwerkstoffs bei gleichzeitig lokaler Texturierung der Eigenschaften.

Eine Einbettung kann durch Verwendung einer angepassten Kaltgasspritz-Prozesskette gelingen, bei der die Verbindung zwischen Faserwerkstoff und Metall durch mittels Kaltgasspritzen abgeschiedenes Material stufenweise durch (Haft-)Vermittlerschichten gelingt, die den Faserwerkstoff beim Auftrag nicht zerstören. Generell können die Faserwerkstoffe dabei entlang jeder Richtung eines Bauteils verlegt werden, z. B. uniaxial, in einer Ebene oder entlang dreidimensionaler Konturen.

Die Aufgabe wird weiterhin durch eine faserverstärkte Struktur gelöst. Diese weist einen Grundkörper und einen Abschnitt auf, der durch eine erfindungsgemäße Matrix verstärkt ist. Die so entstehende, verstärkte Struktur weist vorteilhaft verbesserte thermo-mechanische Eigenschaften auf.

Zum Bestimmen eines zu verstärkenden Abschnitts einer Struktur kann ein computerimplementiertes Verfahren zum Einsatz kommen. Das Verfahren kann die folgenden Schritte umfassen und kann in Verbindung mit dem erfindungsgemäßen Verfahren angewandt werden.

Zunächst wird eine thermomechanische Soll-Belastung der Struktur bestimmt, dies kann beispielsweise durch den Endverbleib und die Anwendung der Struktur definiert sein.

In einem weiteren Schritt wird zumindest eine Simulation der thermomechanischen Soll-Belastung anhand eines Modells der Struktur durchgeführt. Hier kann ein bei der Konstruktion entstandenes 3D CAD Modell in einer FEM-Software simuliert werden.

In einem weiteren Schritt wird der Abschnitt durch Identifizieren von Schwachstellen in den Ergebnissen der Simulation bestimmt.

Anschließend kann zumindest einer der zu verstärkenden Abschnitte definiert werden und eine erneute Simulation unter

Berücksichtigung der vorgesehenen Verstärkung durchgeführt werden. So können die notwendigen Eigenschaften der Matrix zur Verstärkung ermittelt werden.

Im Folgenden wird die Erfindung anhand der in den Figuren dargestellten Ausführungsbeispiele näher beschrieben und erläutert. Es zeigen:
- FIG 1: einen schematischen Querschnitt durch einen zu verstärkenden Abschnitt einer Struktur mit einer Matrix,
- FIG 2: einen schematischen Querschnitt durch eine weitere Struktur mit einer Matrix und
- FIG 3: eine schematische Struktur, mit zwei zu verstärkenden Abschnitten.

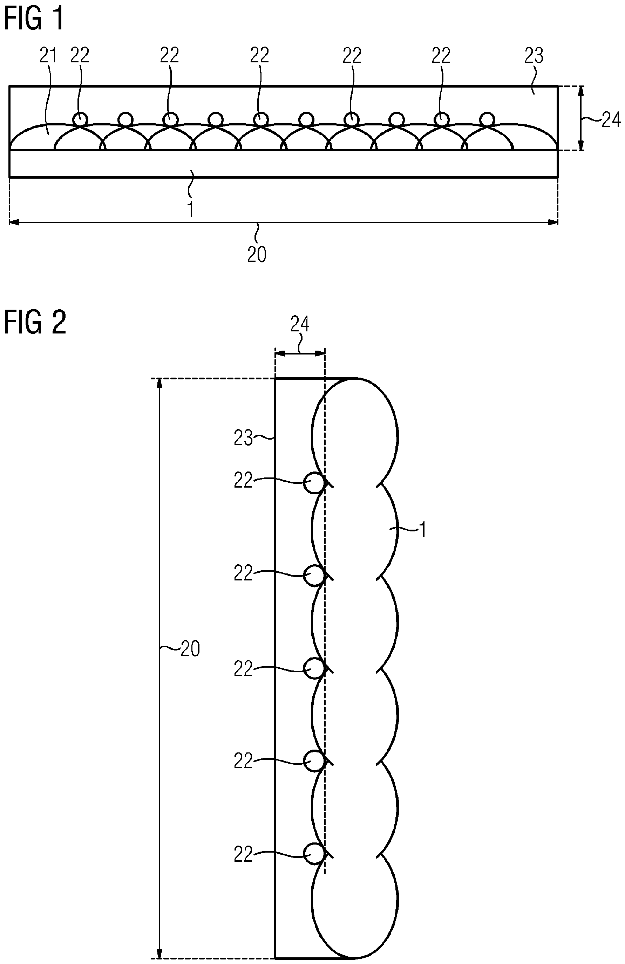

FIG 1 zeigt als ein Ausführungsbeispiel einen schematischen Querschnitt durch einen Ausschnitt 20 einer Struktur 1 mit einer Matrix 24, die durch Fasern 22 verstärkt ist. Im vorliegenden Fall kann ein Halbzeug als Struktur 1 verwendet werden, welches die Geometrie des zu erhaltenden Bauteils annähert. Die Struktur 1 wurde durch eines der erfindungsgemäßen Verfahren um die faserverstärkte Matrix 24 ergänzt, sodass jeweils am zu verstärkenden Abschnitt 20 ein für die Aufgabe des Bauteils optimiertes Werkstoffgefüge entsteht. Das kann z. B. der Auftrag eines bzgl. der Struktur 1 gleichen oder anderen Materials mittels Kaltgasspritzen als eine erste Schicht 21 direkt auf die Struktur 1 sein. Auf diesem Material wird dann beispielsweise ein Faserwerkstoff appliziert. Die Fasern 22 werden wiederum durch den Auftrag einer Deckschicht 23 mittels Kaltgasspritzen eingebettet. Der Werkstoff der Deckschicht 23 kann wiederum bzgl. der geforderten Eigenschaften angepasst werden und vorteilhaft neben der Verstärkung des Abschnitts 20 weitere Funktionen erfüllen. Die Matrix 24 wird in der vorliegenden Ausführungsform zusammenfassend gebildet aus der ersten Schicht 21, den Fasern 22 und der Deckschicht 23. Die Anbindung an die Struktur wird dadurch sichergestellt, dass die Schichten 21, 23 mittels Kaltgasspritzen aufgebracht werden. Die so erhaltenen Schichten weisen eine sehr hohe Haftfestigkeit und Robustheit auf.

FIG 2 zeigt einen schematischen Querschnitt durch eine weitere Struktur 1 mit einer Matrix 24. Hier wurde die Struktur 1 mittels einem additiven Verfahren, z. B. dem Auftragschwei-ßen, gefertigt. Fasern 22 werden im vorliegenden Fall z. B. als beschichtete Fasern auf die Struktur 1 aufgebracht. Eine Deckschicht 23 bindet die Fasern 22 and die Struktur 1 an und verstärkt diese im Abschnitt 20. In diesem Ausführungsbeispiel kann auch ohne Halbzeug durch ein additives Verfahren (z. B. ein Auftragschweißverfahren) ein Bauteil bzw. eine Struktur 1 entstehen, das/die nachfolgend mittels eines der erfindungsgemäßen Verfahren lokal im Abschnitt 20 verstärkt wird. Das Verstärken wird durch die Ablage von Faserwerkstoffen (hier nicht gezeigt) und deren Ein- /Anbindung durch Kaltgasspritzen vorteilhaft realisiert. In anderen Worten erfolgt die Einbettung der Fasern z. B. durch Kaltgasspritzen.

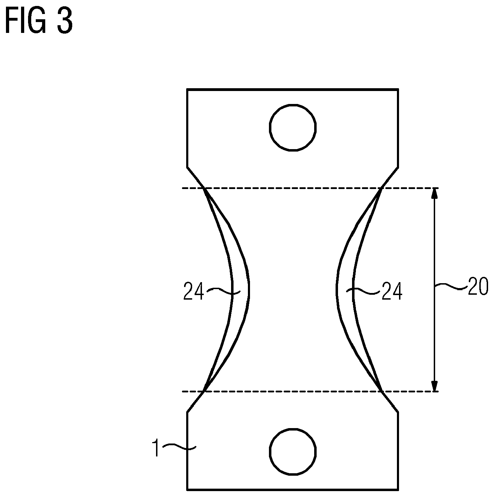

FIG 3 zeigt eine Struktur 1, die eine Einschnürung im Abschnitt 20 aufweist. Die Einschnürung bewirkt eine Schwächung der Struktur 1. In diesem Bereich könnte also z. B. durch Simulation festgestellt werden, dass eine Matrix 24 zur Verstärkung vorgesehen werden soll. Mit einem der erfindungsgemäßen Verfahren könnte also die faserverstärkte Matrix 24 beidseitig aufgebracht werden. So können die Eigenschaften des ursprünglichen Struktur 1 erhalten bleiben und lokal im Abschnitt 20 eine Verstärkung vorgesehen werden. Dies führt dazu, dass ein hybrides Bauteil mit den Vorteilen der Struktur 1 und der Matrix 24 entsteht.

Zusammenfassend betrifft die Erfindung ein Verfahren zum zumindest abschnittsweisen Verstärken einer Struktur 1 durch eine faserverstärkten Matrix 24. Um die mechanischen und thermischen Eigenschaften von Strukturen lokal zu verbessern, insbesondere die thermo-mechanische Belastbarkeit zu erhöhen, werden die Schritte vorgeschlagen:
- Bereitstellen der Struktur 1 mit einem zu verstärkenden Abschnitt 20,
- Aufbringen von Fasern 22 auf den zu verstärkenden Abschnitt 20 und
- Aufbringen der Matrix 24 mittels Kaltgasspritzen, sodass die Fasern in die Matrix 24 eingebettet werden und die Matrix an die Struktur, insbesondere stoffschlüssig, angebunden wird.

### Bezugszeichen

- 1: Struktur
- 20: zu verstärkender Abschnitt
- 21: erste Schicht
- 22: Fasern
- 23: Deckschicht
- 24: Matrix

## Patentansprüche

1. Verfahren zum zumindest abschnittsweisen Verstärken einer Struktur (1) durch eine faserverstärkte Matrix (24), umfassend die Schritte:
- Bereitstellen der Struktur (1) mit einem zu verstärkenden Abschnitt (20),
- Aufbringen von Fasern (22) auf den zu verstärkenden Abschnitt (20) und
- Aufbringen der Matrix (24) mittels Kaltgasspritzen, sodass die Fasern in die Matrix (24) eingebettet werden und die Matrix an die Struktur, insbesondere stoffschlüssig, angebunden wird.

2. Verfahren nach Anspruch 1, umfassend den Schritt:
- Aufbringen einer ersten Schicht (21) mittels Kaltgasspritzen auf den zu verstärkenden Abschnitt (20), wobei die Fasern (22) auf die erste Schicht (21) aufgebracht werden.

3. Verfahren nach Anspruch 2, wobei die erste Schicht (21) einen Teil der Matrix (24) bildet.

4. Verfahren nach einem der vorhergehen Ansprüche, umfassend den Schritt:
- Aufbringen einer Deckschicht (23) mittels Kaltgasspritzen auf die Fasern (21), sodass die Fasern (22) von der Deckschicht (23) abgedeckt sind.

5. Verfahren nach einem der vorhergehen Ansprüche, wobei die Fasern (22) SiC-Fasern, Kohlefasern und/oder Glasfasern sind.

6. Verfahren nach einem der vorhergehen Ansprüche, wobei die Matrix (24) Al, Mn, Cu oder deren Legierungen aufweist.

7. Verfahren nach einem der vorhergehen Ansprüche, wobei zum Aufbringen der Fasern (22) ein Haftvermittler, insbesondere aus der Gruppe Zn, Sn auf den zu verstärkenden Abschnitt (20) aufgebracht wird.

8. Verfahren nach einem der vorhergehen Ansprüche, wobei zum Bereitstellen der Struktur (1) zumindest Teile der Struktur (1) mittels eines generativen Verfahrens erzeugt werden.

9. Verfahren nach einem der vorhergehen Ansprüche, wobei zum Bereitstellen der Struktur (1) ein Halbzeug der Struktur (1) bereitgestellt wird, wobei das Halbzeug eine um den Abschnitt (20) bzw. um die Matrix (24) verringerte Geometrie aufweist.

10. Verfahren nach einem der vorhergehen Ansprüche, wobei die Struktur (1) eine metallische Struktur ist.

11. Verfahren nach einem der Ansprüche 1 bis 9, wobei die Struktur (1) eine nichtmetallische Struktur ist und zum Aufbringen der Matrix auf den Abschnitt eine Haftvermittlerschicht vorgesehen ist.

12. Verfahren nach einem der vorhergehen Ansprüche, wobei zum Bereitstellen der Struktur (1) zumindest ein den Abschnitt (20) umfassender Teil der Struktur (1) additiv gefertigt wird.

13. Faserverstärkte Struktur, aufweisend eine Struktur (1) und einen Abschnitt (20) mit einer Matrix (24), wobei die Matrix (24) zur Verstärkung der Struktur (1) mittels eines Verfahrens nach einem der vorhergehenden Ansprüche aufgebracht wurde.
